# EUROPÄISCHE PATENTSCHRIFT

(11) **EP 0 698 422 B1**
(45) Veröffentlichungstag und Bekanntmachung des Hinweises auf die Patenterteilung: **01.12.1999**
(21) Anmeldenummer: 95108892.1
(22) Anmeldetag: 09.06.1995
(51) Int. Cl.: B05D 7/14, F16L 59/14

(54) **Verfahren zur Isolierung von Rohren**
Procedure for insulation of pipes
Procédé pour l'isolation des tubes

(30) Priorität: 22.06.1994 DE 4421817
(43) Veröffentlichungstag der Anmeldung: 28.02.1996
(73) Patentinhaber: BAYER AG, 51368 Leverkusen (DE)
(72) Erfinder: Eisen, Norbert, Dr., D-50937 Köln (DE); Godthardt, Lutz-Peter, D-51371 Leverkusen (DE)

(56) Entgegenhaltungen:
- EP-A- 0 054 210
- DE-A- 3 609 540
- DE-A- 4 022 741

## Beschreibung

Mit Polyurethanhartschaumstoff isolierte Rohre finden hauptsächlich Anwendung in der Fernwärmeversorgung. Dort wird fast ausschließlich das Verbund-Kunststoffmantelrohrsystem eingesetzt. Dieses System besteht aus werkmäßig gedämmten Rohren, welche aus einem Stahlmediumrohr, einem Polyethylenmantelrohr als Deckschicht, sowie Polyurethan-Hartschaumstoff als Dämmaterial aufgebaut sind. Die Verlegung der Rohre erfolgt in einer Sandbettung. Die Kunststoffverbundmantelrohr-Fernheizleitung stellt eine Verbundkonstruktion dieser drei Komponenten dar.

Die Dämmung wird üblicherweise durch Ausschäumung des Hohlraums zwischen Stahl- und Mantelrohr erzielt.

Die vorisolierten Rohre eignen sich zur direkten Erdverlegung in einer Sandbettung. Der erforderliche Platzbedarf ist gering. Das Kunststoffmantelrohr kann an jeder beliebigen Stelle den Bauverhältnissen entsprechend angepaßt und zusammengeschweißt werden. Durch das Verbundsystem des Kunststoffmantelrohres ergeben sich hohe Kosteneinsparungen durch kompensations- und, größtenteils, festpunktfreie Verlegung.

Andere Techniken, wie das Haubenkanal-System, erfordern wesentlich kostenintensivere Verlegetechniken.

Der Wärmetransport findet über das Stahlmediumrohr statt.

Die heute gebräuchlichen Polyurethanhartschaumstoffe sind für Dauerbetriebstemperaturen bis 130°C und kurzfristig bis 140°C ausgelegt. Dies ist für die meisten westeuropäischen Fernwärmenetze ausreichend. Osteuropäische Kraftwerke liefern jedoch wesentlich höhere Vorlauftemperaturen, die 200°C erreichen können. Für derartige Temperaturbereiche ist der zur Zeit gebräuchliche Polyurethanhartschaum nicht geeignet. Als Lösung sind Systeme mit einem zweischichtigen Aufbau der Wärmedämmung bekannt. Die innere hochtemperaturbelastete Schicht besteht aus anorganischer Mineralfaser. Als zweite Dämmschicht wird Polyurethanhartschaumstoff verwendet. Diese Technik liefert jedoch kein Verbundsystem mehr, da die Haftung der Mineralfaser an dem Stahlmediumrohr gegenüber PUR-Schaumstoff vernachlässigbar gering ist. Ein solches "Gleitsystem" erfordert bei der Verlegung eine wesentlich aufwendigere Kompensation der axialen Verschiebungskräfte und eine Installation von Festpunkten.

Aufgabe der Erfindung ist die Entwicklung einer hochtemperaturtauglichen Wärmedämmung, die mit Stahl und Mantelrohr ein Verbundsystem bildet.

Gegenstand der Erfindung ist ein Verfahren zur Isolierung (Dämmung) von Rohren nach dem Verbundprinzip, dadurch gekennzeichnet, daß mindestens eine innere Schicht auf ein Stahlrohr aufgebracht wird, die im wesentlichen aus einem Polyisocyanuratkunststoff besteht, daran auschließend mindestens eine zweite Schicht, die aus Polyurethanhartschaumstoff aufgebaut ist, der dann das Polyethylenmantelrohr als Deckschicht folgt.

Die innere Schicht, die vorzugsweise nach dem Rotationsgießprinzip (DE-OS 4 118 362), mittels Sprühtechnik oder durch Formverschäumung aufgebracht wird, hat in der Regel eine Rohdichte im Bereich von 200 bis 1 100 kg/m³, vorzugsweise 300 bis 500 kg/m³. Die folgende Schicht aus einem Polyurethanhartschaumstoff kann in dem üblichen Formverschäumungsverfahren erzeugt werden bzw. ebenfalls vorzugsweise nach dem Rotationsgieß- oder Sprühverfahren, sie hat üblicherweise Rohdichten im Bereich von 80-100 kg/m³. Der innere Polyisocyanuratkunststoff zeichnet sich durch sehr hohe Temperaturstabilität und Haftung auf dem Stahlrohr aus.

Die gute Wärmedämmung wird im wesentlichen durch den Polyurethanhartschaumstoff geliefert.

Die innere Schicht sollte eine Dicke aufweisen, die für ein Absinken der Temperatur auf mindestens 140°C sorgt, so daß der Polyurethanhartschaumstoff akzeptablen Temperaturen ausgesetzt ist. Scherversuche an einem solchen Verbundsystem bis zu 200°C zeigten überraschend hohe Werte, die mit formverschäumten Polyurethansystemen nicht erreicht werden. Die Rotationsgieß- oder Sprühtechnik ermöglicht die Verarbeitung solcher hochtemperaturstabilen Systeme mit hoher Rohdichte.

Erfindungsgemäß bevorzugt ist, daß
- der Polyisocyanurat-Kunststoff hergestellt wird durch Umsetzung eines
   a1) aromatischen Polyisocyanats oder
   a2) eines endständigken NCO-Gruppe aufweisenden Prepolymers mit einem NCO-Gehalt von 5 bis 20 Gew.-%, das durch Reaktion von
      1. 4,4'-Diphenylmethandiisocyanat, gegebenenfalls im Gemisch mit 2,4- und 2,2-Isomeren und 0 bis 30 Gew.-% höherfunktionellen Anteilen, mit einem
      2. 2 bis 4 OH-Gruppen aufweisenden Polyether vom Molekulargewicht 1 000 bis 6 000 erhältlich ist, mit
   b) einer Polyolkomponente, enthaltend
      1. einen 2 bis 4 gegenüber Isocyanaten aktive Wasserstoffatome aufweisenden Polyether vom Molekulargewicht 1 000 bis 7 000,
      2. 0 bis 0,5 Gew.-% Wasser,
      3. 0 bis 5 Gew.-% eines aliphatischen/aromatischen oder cycloaliphatischen Polyamins und/oder Polyimins vom Molekulargewicht 32 bis 1000 als Vernetzer,
      4. 2 bis 10 Gew.-% eines Trimerisationskatalysators und gegebenenfalls
      5. Hilfs- und Zusatzstoffe,
- daß als aromatisches Polyisocyanat ein Gemisch aus Diphenylmethandiisocyanat und Polyphenylpolyisocyanaten (rohes MDI) verwendet wird,
- daß die Umsetzung der Komponenten a1) oder a2) mit b) bei einer Kennzahl von 300 bis 2 000 erfolgt,
- daß der Auftrag der Polyisocyanuratschicht mit Hilfe von Mischköpfen und Gießdüsen erfolgt, wobei der Mischkopfvorschub entweder in definiertem Abstand der Mischköpfe parallel zur Rotationsachse erfolgt oder das Rohr in axialer Richtung unter fest positionierten Mischköpfen mit definiertem Vorschub bewegt wird.

Erfindungsgemäß bevorzugt ist,
- daß der Polyurethan-Hartschaumstoff durch Umsetzung eines
   a) aromatischen Polyisocyanats mit
   b) einer im Mittel mindestens 3 gegenüber Isocyanaten reaktive Wasserstoffatome aufweisenden Polyolkomponente, enthaltend
      1. einen mindestens 2 Hydroxylgruppen aufweisenden Polyether vom Molekulargewicht 300 bis 700,
      2. ein Treibmittel, sowie gegebenenfalls
      3. eine mindestens 3 Hydroxylgruppen aufweisende Verbindung vom Molekulargewicht 62 bis 299 als Kettenverlängerungs- oder Vernetzungsmittel und gegebenenfalls
      4. Hilfs- und Zusatzstoffe,
      hergestellt wird,
- daß als aromatisches Polyisocyanat ein Gemisch aus Diphenylmethandiisocyanat und Polyphenylpolymethylen-polyisocyanaten (rohes MDI) verwendet wird,
- daß Wasser als Treibmittel verwendet wird,
- daß Alkane als Treibmittel verwendet werden.

Der für die Herstellung des Polyisocyanuratkunststoffes verwendete Katalysator ist vorzugsweise Kaliumacetat oder Natriumacetat, welches gegebenenfalls in Ethylenglykol oder Diethylenglykol gelöst ist.

Die Kennzahlen für die Umsetzung von Polyisocyanuratkunststoff liegen vorzugsweise im Bereich von 350 bis 900.

Die als Vernetzer vom Molekulargewicht 32 bis 1 000 eingesetzten Polyamine und/oder Polyimine sind vorzugsweise
a) bifunktionelle Amine und Imine:
   Ethylendiamin, Propylendiamin, Butylendiamin, Pentamethylendiamin, Hexamethylendiamin und deren höhere Homologe, 1,4-Diamincyclohexan, Isophorondiamin, Bis-(4-aminocyclohexyl)-methan, Piperazin, Bis-(2-aminoethyl)-piperazin, Bis-(3-aminopropyl)-piperazin, 2-Aminoethylpiperazin, 3-Aminopropylpiperazin, N,N-Dimethylethylendiamin,
b) höherfunktionelle Amine und Imine:
   Diethylentriamin, Triethylentetramin, Tetraethylenpentamin, Pentaethylenhexamin und weitere höhere Homologe wie Tripropylentretramin, Tetrapropylenpentamin, Pentapropylenhexamin.

Für die Herstellung der Polyurethanhartschaumstoffe werden als Ausgangskomponenten eingesetzt:

Polyisocyanate, wie sie z.B. von W. Siefken in Justus Liebigs Annalen der Chemie, 562, Seiten 75 bis 136, beschrieben werden, beispielsweise solche der Formel

Q(NCO)ₙ,

in der
- n =: 2 bis 4, vorzugsweise 2, und
- Q: einen aromatischen Kohlenwasserstoffrest mit 6 bis 15, vorzugsweise 6 bis 13 C-Atomen,
bedeutet, z.B. solche Polyisocyanate, wie sie in der DE-OS 28 32 253, Seiten 10 bis 11, beschrieben werden.

Besonders bevorzugt werden in der Regel die technisch leicht zugänglichen Polyisocyanate, z.B. das 2,4- und 2,6-Toluylendiisocyanat sowie beliebige Gemische dieser Isomeren (TDI), Gemische aus Diphenylmethandiisocyanat und Polyphenyl-polymethylen-polyisocyanaten, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisende Polyisocyanate ("modifizierte Polyisocyanate").

Die Polyisocyanate werden mit der näher definierten Polyolkomponente umgesetzt.

Diese enthält (zu 50 bis 90 Gew.-%) einen (kurzkettigen), mindestens zwei Hydroxylgruppen aufweisenden Polyether vom Molekulargewicht 300 bis 700, der durch Anlagerung von Propylenoxid und/oder Ethylenoxid an Starter wie Sorbit, Ethylenglykol, Trimethylolpropan, Glyzerin, Pentaerythrit und/oder Zucker hergestellt worden ist. Vorzugsweise hat er eine OH-Zahl von 300 bis 600.

In der Polyolkomponente ist auch das (an sich bekannte) Treibmittel, vorzugsweise Wasser (in der Regel in einer Menge von 0,5 bis 10 Gew.-%), enthalten.

Als Treibmittel kommen neben dem vorzugsweise verwendeten Wasser, das bekanntlich durch Reaktion mit Isocyanaten CO₂ freisetzt, leichtflüchtige organische Substanzen in Frage, z.B. perhalogenierte und teilhalogenierte Kohlenwasserstoffe, die bei einem Druck von 1 013 mbar innerhalb des Temperaturbereichs von - 50°C bis +75°C, vorzugsweise von +10°C bis +25°C sieden, wie Trichlorfluormethan (R11), 1,1-Dichlor-2,2,2-trifluorethan (R123), 1,1-Dichlor-1-fluorethan (R141b), Dichlorfluormethan (R11), 1-Chlor-1,1-difluor-ethan (R142b), 1,1,1,2-Tetrafluorethan (R134a) sowie aliphatische oder cycloaliphatische C₃-C₆-Kohlenwassserstoffe, z.B. Propan, Butan, Pentan, Isopentan, Cyclopentan und Cyclohexan.

Schließlich enthält die Polyolkomponente gegebenenfalls (in einer Menge von 0 bis 30 Gew.-%) einen tert. Aminogruppen aufweisenden Polyether vom Molekulargewicht 200 bis 700, der durch Anlagerung von Ethylenoxid und/oder Propylenoxid an z.B. Triethanolamin, Diisopropanolamin oder Ethylendiamin erhalten wurde. Vorzugsweise hat er eine OH-Zahl von 250 bis 700.

In der Polyolkomponente befinden sich auch noch gegebenenfalls Verbindungen mit mindestens drei Hydroxylgruppen mit einem Molekulargewicht von 32 bis 299, die als Kettenverlängerungsmittel oder Vernetzungsmittel dienen. Beispiele hierfür werden in der DE-OS 28 32 253, Seiten 19 bis 20, beschrieben.

Gegebenenfalls mitzuverwenden sind auch Hilfs- und Zusatzstoffe, wie Emulgatoren und Schaumstabilisatoren. Als Emulgatoren sind solche auf Basis alkoxylierter Fettsäuren und höherer Alkohole bevorzugt.

Als Schaumstabilisatoren kommen vor allem Polyethersiloxane, speziell wasserunlösliche Vertreter, in Frage. Diese Verbindungen sind im allgemeinen so aufgebaut, daß ein Copolymerisat aus Ethylenoxid und Propylenoxid mit einem Polydimethylsiloxanrest verbunden ist. Wasserlösliche Schaumstabilisatoren sind z.B. in den US-PS 28 34 748, 29 17 480 und 36 29 308 beschrieben.

Auch Reaktionsverzögerer, z.B. sauer reagierende Stoffe wie Salzsäure oder organische Säurehalogenide, ferner Zellregler der an sich bekannten Art wie Paraffine oder Fettalkohole oder Dimethylpolysiloxane sowie Pigmente oder Farbstoffe, ferner Stabilisatoren gegen Alterungs- und Witterungseinflüsse, Weichmacher und fungistatisch und bakteriostatisch wirkende Substanzen sowie Füllstoffe wie Bariumsulfat, Kieselgur, Ruß oder Schlämmkreide können in der Polyolkomponente mitenthalten sein.

Weitere Beispiele von gegebenenfalls mitzuverwendeten oberflächenaktiven Zusatzstoffen und Schaumstabilisatoren sowie Zellreglern, Reaktionsverzögerern, Stabilisatoren, flammhemmenden Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl Hanser Verlag, München 1966, z.B. auf den Seiten 103 bis 113, beschrieben.

Erfindungsgemäß können auch die aus der Polyurethanchemie an sich bekannten Katalysatoren wie tert. Amine und/oder metallorganische Verbindungen in der Polyolkomponente mit enthalten sein.

Durchführung des erfindungsgemäßen Verfahrens:

Ein Rohr wird je nach Durchmesser auf einer entsprechenden Anlage mit definierter Drehzahl in Rotation versetzt. Je nach geforderter Dämmschichtdicke wird unter einem definierten Vorschub des Mischkopfes das sich bildende Reaktionsgemisch per Schlitzdüse aufgegossen. Für verschiedene Ausstoßmengen müssen verschiedene Düsengeometrien, vorzugsweise Schlitzdüsen, verwendet werden.

Wird das rotierende Rohr in Richtung Längsachse bewegt, dann müssen die Mischköpfe im vorgegebenen Abstand fest positioniert werden.

### Ausführungsbeispiel: (GT = Gewichtsteile; MG = Molekulargewicht)

| | |
|---|---|
| Rohrdurchmesser: | 63 mm |
| Rohrdrehzahl: | 95 U/min |
| Ausstoß für Hochtemperaturdämmung | 1 500 g/min |
| Vorschub des Mischkopfes: | 100 cm/min |
| Dämmdicke: | 20 mm |

### Polyisocyanuratkunststoffrezeptur:

- 100 GT: Trimethylolpropan gestarteter Polyether mit Propylenoxid der OH-Zahl 56, MG 3 000
- 0,2 GT: Wasser
- 1,0 GT: Schaumstabilisator B 8421 (Fa. Goldschmidt)
- 4,0 GT: Kaliumacetat (25 % in Ethylenglykol)
- 200 GT: rohes MDI (NCO-Gehalt: 31,8 Gew.%)

Kennzahl ≈ 900.

Die Rohdichte betrug 500 kg/m³.

### PUR-Hartschaumstoff-Rezeptur:

- 50 GT: auf Zucker gestarteter Polyether mit Propylenoxid der OH-Zahl 450, MG 350
- 50 GT: Sorbit/Glyzerin gestarteter Polyether mit Propylenoxid der OH-Zahl 450, MG 570
- 5 GT: Wasser
- 1 GT: Schaumstabilisator B 8423 (Fa. Goldschmidt)
- 1,5 GT: Dimethylcyclohexylamin
- 185 GT: rohes MDI (NCO 31,8 Gew.-%)

Kennzahl 110.

Der Hartschaumstoff wurde nach dem üblichen Formschäumverfahren hergestellt, indem der Hohlraum zwischen dem mit Polyisocyanuratkunststoff beschichteten Stahlrohr und einem Polyethylenmantelrohr (⌀ 200 mm) ausgeschäumt wurde. Die Rohdichte betrug 90 kg/m³.

Eigenschaften des Hochtemperaturverbundrohres (HTVR) im Vergleich zu einem üblichen Kunststoffmantelrohr (KMR):

Beide Rohre haben den gleichen Stahl- und Mantelrohrdurchmesser (60,3 bzw. 200 mm). Das HTVR weist den oben beschriebenen, zweischichtigen Aufbau auf; das KMR lediglich den einschichtigen Aufbau aus dem ebenfalls oben beschriebenen PUR-Hartschaumstoff.

| | **Scherfestigkeiten tangential [MPa] gemäß EN 253** | |
|---|---|---|
| Prüftemperatur [°C] | KMR | HTVR |
| RT | 0,7 | 0,8 |
| 140 | 0,35 | 0,6 |
| 180 | 0,1 | 0,45 |
| 200 | 0 | 0,35 |

Wie die Scherversuche zeigen, weist nur das HTVR bei hohen Temperaturen (180°C, 200°C) die nötigen Scherfestigkeiten auf, die den Einsatz als Verbundrohr rechtfertigen. Bei den üblichen PUR-Hartschaumstoffen sorgen Zersetzungsreaktionen sowie das Erreichen der Erweichungstemperatur für ungenügende Scherkräfte

## Patentansprüche

1. Verfahren zur Isolierung von nach dem Verbundprinzip aufgebauten Rohren, bestehend aus einem Stahlrohr, einem Polyethylenmantelrohr als Deckschicht sowie einem Polyurethanhartschaum als Dämmschicht, dadurch gekennzeichnet, daß auf das Stahlrohr mindestens eine Schicht eines Polyisocyanuratkunststoffes und anschließend mindestens eine Schicht, die ausschließlich aus Polyurethanhartschaum besteht, aufgebracht wird, der dann das Polyethylenmantelrohr folgt.

2. Verfahren gemäß Anspruch 1, dadurch gekennzeichnet, daß der Polyisocyanuratkunststoff durch Umsetzung eines
a1) aromatischen Polyisocyanats oder
a2) eines endständige NCO-Gruppen aufweisenden Prepolymers mit einem NCO-Gehalt von 5 bis 20 Gew.-%, das durch Reaktion von
1. 4,4'-Diphenylmethandiisocyanat, gegebenenfalls im Gemisch mit 2,4'- und 2,2'-Isomeren und 0 bis 30 Gew.-% höherfunktionellen Anteilen, mit einem
2. 2 bis 4 OH-Gruppen aufweisenden Polyether vom Molekulargewicht 1 000 bis 6 000 erhältlich ist, mit
b) einer Polyolkomponente, enthaltend
1. einen 2 bis 4 gegenüber Isocyanaten aktive Wasserstoffatome aufweisenden Polyether vom Molekulargewicht 1 000 bis 7 000,
2. 0 bis 0,5 Gew.-% Wasser,
3. 0 bis 5 Gew.-% eines aliphatischen, aromatischen und oder cycloaliphatischen Polyamins und/oder Polyimins vom Molekulargewicht 32 bis 1 000 als Vernetzer,
4. 2 bis 10 Gew.-% eines Trimerisationskatalysators und gegebenenfalls
5. Hilfs- und Zusatzstoffe,
hergestellt wird.

3. Verfahren gemäß Anspruch 2, dadurch gekennzeichnet, daß als aromatisches Polyisocyanat ein Gemisch aus Diphenylmethandiisocyanat und Polyphenyl-polymethylen-polyisocyanaten (rohes MDI) verwendet wird.

4. Verfahren gemäß Anspruch 2 und 3, dadurch gekennzeichnet, daß die Umsetzung der Komponenten a1) oder a2) mit b) bei einer Kennzahl von 300 bis 2 000 erfolgt.

5. Verfahren gemäß Anspruch 1, dadurch gekennzeichnet, daß der Polyurethanhartschaumstoff durch Umsetzung eines
a) aromatischen Polyisocyanats mit
b) einer im Mittel mindestens 3 gegenüber Isocyanaten reaktive Wasserstoffatome aufweisenden Polyolkomponente, enthaltend
1. einen mindestens 2 Hydroxylgruppen aufweisenden Polyether vom Molekulargewicht 300 bis 700,
2. ein Treibmittel, sowie gegebenenfalls
3. eine mindestens 3 Hydroxylgruppen aufweisende Verbindung vom Molekulargewicht 62 bis 299 als Kettenverlängerungs- oder Vernetzungsmittel und gegebenenfalls
4. Hilfs- und Zusatzstoffe,
hergestellt wird.

6. Verfahren gemäß Anspruch 5, dadurch gekennzeichnet, daß als aromatisches Polyisocyanat ein Gemisch aus Diphenylmethandiisocyanat und Polyphenyl-polymethylen-polyisocyanaten (rohes MDI) verwendet wird.

7. Verfahren gemäß Anspruch 5 und 6, dadurch gekennzeichnet, daß Wasser als Treibmittel verwendet wird.

8. Verfahren gemäß Anspruch 5 und 6, dadurch gekennzeichnet, daß Alkane als Treibmittel verwendet werden.

9. Verfahren gemäß Anspruch 1 bis 8, dadurch gekennzeichnet, daß die Polyisocyanuratschicht und/oder die Polyurethanhartschaumschicht durch das Rotationsgießverfahren aufgebracht wird.

10. Verfahren gemäß Anspruch 1 bis 8, dadurch gekennzeichnet, daß die Polyisocyanuratschicht und/oder die Polyurethanhartschaumschicht durch das Sprühverfahren oder nach dem Formverschäumungsverfahren aufgebracht wird.

## Claims

1. Process for insulating pipes of a composite structure, consisting of a steel pipe, a polyethylene jacketing pipe as the outer layer together with rigid polyurethane foam as the insulating layer, characterised in that at least one layer of a polyisocyanurate plastic and then at least one layer solely consisting of rigid polyurethane foam are applied onto the steel pipe, which layer is followed by polyethylene jacketing pipe.

2. Process according to claim 1, characterised in that the polyisocyanurate plastic is produced by reacting
a1) an aromatic polyisocyanate or
a2) a prepolymer having terminal NCO groups and an NCO content of 5 to 20 wt.%, which may be obtained by the reaction of
1. 4,4'-diphenylmethane diisocyanate, optionally mixed with 2,4'- and 2,2'-isomers and 0 to 30 wt.% of more highly functional fractions, with
2. a polyether having 2 to 4 OH groups and a molecular weight of 1000 to 6000, with
b) a polyol component containing
1. a polyether having 2 to 4 isocyanate-active hydrogen atoms and a molecular weight of 1000 to 7000,
2. 0 to 0.5 wt.% of water,
3. 0 to 5 wt.% of an aliphatic, aromatic and/or cycloaliphatic polyamine and/or polyimine of a molecular weight of 32 to 1000 as crosslinking agent,
4. 2 to 10 wt.% of a trimerisation catalyst and optionally
5. auxiliary substances and additives.

3. Process according to claim 2, characterised in that a mixture of diphenylmethane diisocyanate and polyphenylpolymethylene polyisocyanates (crude MDI) is used as the aromatic polyisocyanate.

4. Process according to claims 2 and 3, characterised in that the reaction of the components a1) or a2) with b) proceeds at an index of 300 to 2000.

5. Process according to claim 1, characterised in that the rigid polyurethane foam is produced by reacting
a) an aromatic polyisocyanate with
b) a polyol component having an average of at least three isocyanate-reactive hydrogen atoms and containing
1. a polyether having at least two hydroxyl groups and a molecular weight of 300 to 700,
2. a blowing agent, optionally together with
3. a compound having at least three hydroxyl groups and a molecular weight of 62 to 299 as chain extender or crosslinking agent and optionally
4. auxiliary substances and additives.

6. Process according to claim 5, characterised in that a mixture of diphenylmethane diisocyanate and polyphenylpolymethylene polyisocyanates (crude MDI) is used as the aromatic polyisocyanate.

7. Process according to claims 5 and 6, characterised in that water is used as the blowing agent.

8. Process according to claims 5 and 6, characterised in that alkanes are used as the blowing agent.

9. Process according to claims 1 to 8, characterised in that the polyisocyanurate layer and/or the rigid polyurethane foam layer are applied by rotational moulding.

10. Process according to claims 1 to 8, characterised in that the polyisocyanurate layer and/or the rigid polyurethane foam layer are applied by spraying or using the foam moulding process.

## Revendications

1. Procédé pour isoler des tubes formés selon le principe des composites, consistant en un tube en acier, un tube d'enveloppe en polyéthylène jouant le rôle de couche de couverture ainsi qu'en une mousse de polyuréthane rigide jouant le rôle de couche isolante, caractérisé en ce que sur le tube en acier est appliquée au moins une couche d'une matière synthétique de polyisocyanurate puis au moins une couche qui consiste exclusivement en une mousse de polyuréthane rigide, suivie ensuite par le tube d'enveloppe en polyéthylène.

2. Procédé selon la revendication 1, caractérisé en ce que la matière synthétique de polyisocyanurate est préparée par réaction
a1) d'un polyisocyanate aromatique ou
a2) d'un prépolymère présentant des groupes NCO terminaux ayant une teneur en NCO de 5 à 20 % masse, qui peut être obtenu par réaction de
1. 4,4'-diphénylméthanediisocyanate, éventuellement en mélange avec des isomères 2,4' et 2,2' et 0 à 30 % en masse de constituants à plus haute fonctionnalité, avec
2. un polyéther comportant 2 à 4 groupes OH, d'une masse moléculaire de 1000 à 6000, avec
b) un composant polyol contenant
1. un polyéther comportant 2 à 4 atomes d'hydrogène actifs à l'égard des isocyanates, d'une masse moléculaire de 1000 à 7000,
2. 0 à 0,5 % en masse d'eau,
3. 0 à 5 % en masse d'une polyamine et/ou polyimine aliphatique, aromatique et/ou cycloaliphatique, d'une masse moléculaire de 32 à 1000, en tant que réticulant,
4. 2 à 10 % en masse d'un catalyseur de trimérisation et éventuellement
5. des adjuvants et additifs.

3. Procédé selon la revendication 2, caractérisé en ce que l'on utilise comme polyisocyanate aromatique un mélange de diphénylméthanediisocyanate et de polyphényl-polyméthylène-polyisocyanates (MDI brut).

4. Procédé selon les revendications 2 et 3, caractérisé en ce que la réaction du composant a1) ou a2) avec b) se déroule à un nombre caractéristique de 300 à 2000.

5. Procédé selon la revendication 1, caractérisé en ce que la mousse de polyuréthane rigide est préparée par réaction
a) d'un polyisocyanate aromatique avec
b) un composant polyol comportant en moyenne au moins 3 atomes d'hydrogène réactifs à l'égard des isocyanates, contenant
1. un polyéther comportant au moins deux groupes hydroxyle, d'une masse moléculaire de 300 à 700,
2. un porogène, et éventuellement
3. un composé comportant au moins 3 groupes hydroxyle d'une masse moléculaire de 62 à 299 en tant qu'agent d'allongement de chaîne ou réticulant, et éventuellement
4. des adjuvants et additifs.

6. Procédé selon la revendication 5, caractérisé en ce que l'on utilise comme polyisocyanate aromatique un mélange de diphénylméthanediisocyanate et de polyphényl-polyméthylènepolyisocyanates (MDI brut).

7. Procédé selon les revendications 5 et 6, caractérisé en ce que l'on utilise l'eau comme porogène.

8. Procédé selon les revendications 5 et 6, caractérisé en ce que l'on utilise des alcanes comme porogène.

9. Procédé selon les revendications 1 à 8, caractérisé en ce que la couche de polyisocyanurate et/ou la couche de mousse de polyuréthane rigide sont appliquées par le procédé de moulage par rotation.

10. Procédé selon les revendications 1 à 8, caractérisé en ce que la couche de polyisocyanurate et/ou la couche de mousse de polyuréthane rigide sont appliquées par le procédé de pulvérisation ou selon le procédé de moussage in situ.
